# EUROPEAN PATENT SPECIFICATION

(11) **EP 2 835 362 B1**
(45) Date of publication and mention of the grant of the patent: **04.05.2016**
(21) Application number: 13179914.0
(22) Date of filing: 09.08.2013
(51) Int. Cl.: C04B 35/46, C02F 1/461, C25B 11/03, C25B 11/04

(54) **Method for producing monolithic titanium suboxide TiOx ceramic electrode for water electrochemical treatment and electrode produced using same**
Verfahren zur Herstellung eines monolithisches keramisches Titan-Suboxid-Elektrode TiOx für elektrochemische Wasserbehandlung und Elektrode hergestellt nach dem Verfahren
Procédé de fabrication d'un électrode monolithique en sous-oxyde de titane céramique TiOx pour le traitment électrochimique de l'eau et l'électrode fabriquée selon ce procédé

(43) Date of publication of application: 11.02.2015
(73) Proprietor: Rigas Tehniska universitate, Riga 1658 (LV)
(72) Inventor: Ozolins, Jurijs, LV-2167 Marupes nov. (LV); Locs, Janis, LV-2127 Olaines nov. (LV); Reimanis, Madars, LV-3328 Kuldigas nov. (LV); Juhna, Talis, LV-1006 Riga (LV); Mezule, Linda, LV-1058 Riga (LV); Sadretdinovs, Romans, LV-3851 Brocenu nov. (LV); Berzina-Cimdina, Liga, LV-1006 Riga (LV)
(74) Representative: Vitina, Maruta

(56) References cited:
- JP-A- 2001 137 858
- US-A- 4 964 966

## Description

The invention relates to a method for producing monolithic titanium suboxide TiOₓ ceramic electrode for water electrochemical treatment and to an electrode produced using this method.

There is known water electrochemical treatment using titanium suboxide (TiOₓ) electrodes. For example, a method [publication of patent application JP2001137858] is described where decalcification of groundwater by electrolysis is performed and disinfection is performed by chlorine compounds, which form in water in the presence of NaCl. However, in the known method an electrode is used, which contains titanium suboxide, in the process of production of which silica is added (mixture of the raw materials contains SiO₂ - 20% and TiO₂ - 80%). The addition of silica increases the density of the electrode material and decreases porosity especially proportion of the open pores (open porosity). Thus the used electrode has small specific active surface.

There is known an electrode [patent US4964966], which comprises 50-500 mm long tube of TiOₓ where x is in the range 1.67 to 1.9, the one end of which is sealed by a plug of plastics, but the inner wall of the tube is treated with a gallium/indium/tin eutectic alloy, a copper tube being spaced from the inner wall of tube by a distance of 2,75 mm, the space between the tube and the copper tube is filled with a Bi/Sn alloy. Through a plug placed at another end of the TiOₓ tube an insulated cable is passed, copper wires of which are sealed in the Bi/Sn alloy, which is filled in the lower part of the tube. The electrode is produced in the following way: one end of the TiOₓ tube is sealed with the polymer plug. The inner wall of the tube is treated with the gallium/indium/tin eutectic alloy, the copper tube is spaced from the inner wall of tube by a distance of 2,75 mm, the space between the treated tube and the copper tube is filled with a Bi/Sn melt and it is cooled. Through a plug placed at another end of the TiOₓ tube an insulated cable is passed, copper wires of which are positioned in the Bi/Sn melt and cooled. If TiOₓ is porous, before producing the electrode, it is impregnated with a polyester resin or an epoxy resin. However, the producing method of the known electrode is technologically very difficult, but the produced electrode has a small specific active surface as pores of titanium suboxide are impregnated with a polyester resin or an epoxy resin.

Often titanium suboxide Ti₄O₇ (TiOₓ, where x=1,75) is used, which is obtained by reduction of TiO₂ in the environment of hydrogen or carbon monoxide for 16 hours at 1230 °C. This technology is complicated and expensive. There is known a method for producing Ti₄O₇ (TiOₓ, where x=1,75) [P.C.S.Hayfield, Development of a New Material - Monolithic Ti4O7 Ebonex Ceramic. Cambridge: Royal Society of Chemistry, 2002, p. 14-15, 28-31, 44], which comprises impregnation of monolithic porous Ti₄O₇ strip with the standard potting resin, preferably, repeated coating of sealed part of electrode with products on carbone tetrachloride basis (Dichtoil), electroplating of nickel over surface of monolithic Ti₄O₇ strip (over filed pores) and creating a soldered connection. However, researches show that under action of capillary forces electrolyte moves above the level of the liquid reaching electric contact, in the result of which contact corrosion occures and contact integrity is destroyed, and due to this reason the operating duration of the electrode with this electric connection is short thus it is not suitable for water electrochemical treatment devices.

The technical problem solved by the present invention is simplification of technology for producing monolithic titanium suboxide TiOₓ ceramic electrodes for devices of water electrochemical treatment and prolongation of electrode operating duration.

The technical problem is solved so that in a method for producing monolithic titanium suboxide TiOₓ ceramic electrode for water electrochemical treatment which contains thermal treating of titanium dioxide TiO₂, forming a titanium suboxide flat strip by extrusion, creating at least one electroconductive contact surface on the titanium suboxide strip and fastening an electroconductive element thus creating an electric connection, sealing the titanium suboxide strip with potting resin, according to the invention, a green body in the shape of a flat strip is formed by extrusion from a mixture of titanium oxide TiO₂ powder, water and binder, the green body is dried, a hole for fastening the electroconductive element in one end of the dried green body is made, a monolithic titanium suboxide TiOₓ, where x is in the range from 1,95 to 1,97, ceramic strip with the open porosity 10-30% is formed by treating the green body in air at the temperature 1100-1300 °C for 1-3 hours and in vacuum at the temperature 1200-1300 °C for 1-3 hours, on the flat surface of the strip around the hole at least 5 mm wide zone of 5-20 microns thick electroconductive coating is sputtered, creating continuous metal-ceramic connection, the electroconductive element, through the hole using fastening elements, is motionlessly mechanically fastened to the titanium suboxide ceramic strip where electroconductive coating is, thereafter, using vacuum impregnation, the end of the electrode where electric connection is created, is sealed with the epoxide resin, sealing it off completely. Producing of monolithic titanium suboxide TiOₓ, where x is in the range from 1,95 to 1,97 technologically is simpler than often used producing of Ti₄O₇ as environment of hydrogen or carbon monoxide is not used. Such regimes of forming and treatment of green body of the mixture of titanium oxide TiO₂ powder, water and binder, are experimentally found, which provide obtaining of monolithic titanium suboxide TiOₓ, where x is in the range from 1,95 to 1,97, ceramic strip with the open porosity 10-30%. Such proportion of open (including interconnected) porosity volume provides large specific active surface where electrochemical processes take place. It was experimentally proved that sputtering of 5-20 microns thick nanostructured electroconductive coating allows creating continuous metal-ceramic connection on the monolithic titanium suboxide TiOₓ, where x is in the range from 1,95 to 1,97, ceramic surface with the open porosity, at the same time the sputtered electroconductive coating deposits only in the external layer of the ceramics, but it does not fill the inner pores (as it would have happened if electroplating would have been used). The electroconductive element is motionlessly mechanically fastened to the titanium suboxide ceramic strip through the hole in the one end of it thus creating mechanically stable electric connection and no thermal deterioration takes place. As monolithic titanium suboxide TiOₓ, where x is in the range from 1,95 to 1,97, ceramic strip is with the open porosity, the end of the electrode, where electric connection is created, is sealed with the epoxide resin, using vacuum impregnation, in order to provide sealing of pores in this part of the electrode.

If around the hole at least 5 mm wide zone of 5-20 microns thick electroconductive coating is sputtered also on the other flat surface of monolithic titanium suboxide TiOₓ, ceramic strip, contact surface of the electroconductive coating is increased.

As the electroconductive coating copper can be sputtered, as it has high conductivity and it is comperatively cheap.

The electroconductive element can be mechanically fastened to the titanium suboxide ceramic strip using a screw which is passed through the hole and motionlessly mechanically fastened with a spring washer and a nut.

Vacuum impregnation with epoxide resin of the end of the electrode where electric connection is created, can be performed by holding it for 4-8 minutes under the pressure 40-50 kPa. Experimentally it was determined that vacuum impregnation with epoxide resin can be performed under the pressure 40-50 kPa, which can be easily achieved using standard equipment. If vacuum impregnation of the end of the electrode where electric connection is created, is performed by holding it for 4-8 minutes under such pressure, the sealing of the pores with epoxide resin is ensured for the depth of at least 1,5 -2 mm, which is enough for the sealling it off completely. If vaccum impregnation is performed under other pressures, the time of holding can be changed. If the end of the electrode which is sealed needs to be in a specific form for its fastening on the water electrochemical treatment device, the sealed end of the electrode can be placed in the mould, which can be filled with a hardening mass.

The monolithic titanium suboxide TiOₓ ceramic electrode for water electrochemical treatment produced according to the proposed method comprises monolithic titanium suboxide TiOₓ, where x is in the range from 1,95 to 1,97, ceramic strip, on the one end of which on the flat surface of the strip around the hole at least 5 mm wide zone of 5-20 microns thick electroconductive coating is sputtered, through the hole with the screw, the spring washer and the nut the electroconductive element is motionlessly mechanically fastened, to which the electrical conductor is connected, and the end of the electrode, where electric connection is created, is sealed with the epoxide resin, sealing it off completely, but the rest of the monolithic titanium suboxide TiOₓ ceramic strip is with the open porosity 10-30%.

Fig. shows schematically a cross section of the monolithic titanium suboxide TiOₓ ceramic electrode for water electrochemical treatment produced by the proposed method.

The proposed methof for producing a monolithic titanium suboxide TiOₓ ceramic electrode for water electrochemical treatment is performed in the following way.

From the mixture of titanium oxide TiO₂ powder, water and binder Zusoplast C93, a green body in the shape of a flat strip with length not more than 200 mm, width 20 mm and thickness 5 mm is formed by extrusion. The length of the flat strip is chosen not more than 200 mm in order an electrode does not have too high voltage drop. The green body is dried. A hole with the diameter 5 mm for fastening the electroconductive element in one end of the dried green body is made with center 10 mm from this end. A monolithic titanium suboxide TiO_{x,} where x is in the range from 1,95 to 1,97, ceramic strip 1 with the open porosity 25% is formed by treating the green body in air at the temperature 1100°C for 2 hours and in vacuum at the temperature 1250°C for 2 hours. On the both surfaces of the monolithic titanium suboxide TiO_{x,} ceramic strip 1 around the hole 2 at least 5 mm wide zone of 5-20 microns thick copper electroconductive coating 3 is sputtered, creating continuous metal-ceramic connection. The electroconductive element - wire lug 4, to which an electrical wire 5 is connected, is motionlessly mechanically fastened to the titanium suboxide ceramic strip 1 where the electroconductive coating 3 is, using a screw 6 which is passed through the hole 2 and is fixed with a spring washer 7 and a nut 8.

The end of the electrode 9 where electric connection is created, at the distance up to 20 mm from the end of the titanium suboxide ceramic strip 1, is sealed by epoxide resin using vacuum impregnation by holding it for 8 minutes under the pressure 45 kPa. The sealing of the pores of the monolithic titanium suboxide TiO_{x,} ceramic strip with epoxide.resin is ensured for the depth of at least 2 mm, which is enough for the sealling off electric connection completely.

The monolithic titanium suboxide TiOₓ ceramic electrode for water electrochemical treatment produced according to the described method comprises monolithic titanium suboxide TiOₓ, where x is in the range from 1,95 to 1,97, ceramic strip 1, on the one end of which on the flat surface of the strip around the hole 2 at least 5 mm wide zone of 5-20 microns thick electroconductive coating 3 is sputtered, to which with the spring washer 7 and the nut 8 the wire lug 4 is motionlessly mechanically fastened, to which the electrical wire 5 is connected, and the end of the electrode 9 where electric connection is created, is sealed with the epoxide resin, sealing it off completely, but the rest of the monolithic titanium suboxide TiOₓ ceramic strip 1 is with the open porosity 10-30%.

The produced electrode has large specific active surface and its operating duration in the water electrochemical treatment devices with the current density of 5-10 mA/cm² exceeds 2 years.

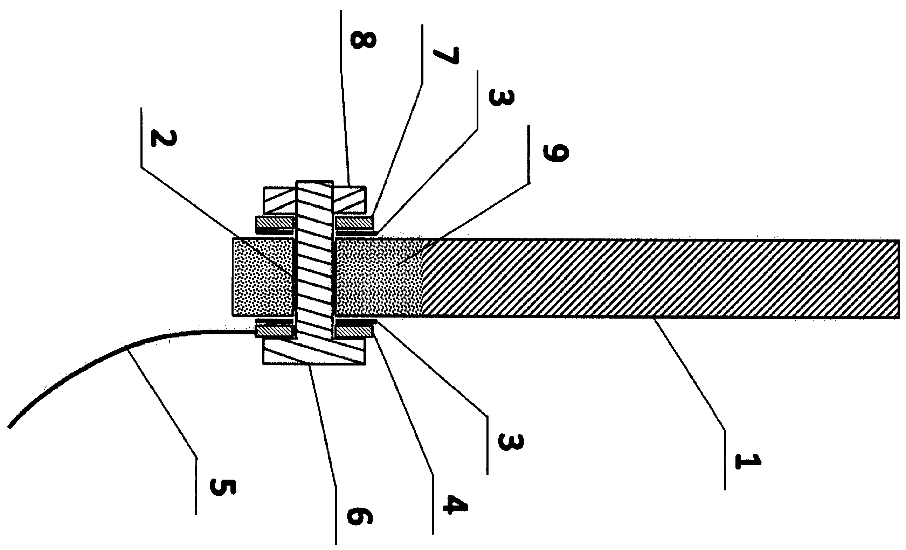

## Claims

1. A method for producing a monolithic titanium suboxide TiOₓ ceramic electrode for water electrochemical treatment comprising thermal treating of titanium dioxide TiO₂, forming a titanium suboxide flat strip by extrusion, sealing the titanium suboxide strip with potting resin, creating at least one electroconductive contact surface on the titanium suboxide strip and fastening an electroconductive element thus creating an electric connection,
**characterized in that**
a green body in the shape of a flat strip with length not more than 200 mm is formed by extrusion from a mixture of titanium oxide TiO₂ powder, water and binder; the green body is dried; a hole (2) for fastening the electroconductive element (4) in one end of the dried green body is made; a monolithic titanium suboxide TiOₓ, where x is in the range from 1.95 to 1.97, ceramic strip (1) with the open porosity 10-30% is formed by treating the green body in air at the temperature 1100-1300 °C for 1-3 hours and in vacuum at the temperature 1200-1300 °C for 1-3 hours; on the flat surface of the strip (1) around the hole (2) at least 5 mm wide zone of 5-20 microns thick electroconductive coating (3) is sputtered, creating continuous metal-ceramic connection; the electroconductive element (4), to which an electrical conductor (5) is connected, through the hole (2) using fastening elements (6,7,8) is motionlessly mechanically fastened to the titanium suboxide ceramic strip (1) where the electroconductive coating (3) is; thereafter, using vacuum impregnation, the end of the electrode (9) where electric connection is created, is sealed with the epoxide resin, sealing it off completely.

2. The method according to Claim 1 **characterized in that** around the hole (2) at least 5 mm wide zone of 5-20 microns thick electroconductive coating (3) is sputtered on both flat surfaces of monolithic titanium suboxide TiOₓ ceramic strip (1).

3. The method according to one of Claim 1 or 2 **characterized in that** copper is sputtered as the electroconductive coating (3).

4. The method according to one of Claim 1-3 **characterized in that** the electroconductive element (4) is motionlessly mechanically fastened to the titanium suboxide ceramic strip (1) using a screw (6) which is passed through the hole (2) and is fixed with a spring washer (7) and a nut (8).

5. The method according to one of Claim 1-4 **characterized in that** vacuum impregnation with epoxide resin of the end of the electrode (9) where electric connection is created, is performed by holding it for 4-8 minutes under the pressure 40-50 kPa.

6. The monolithic titanium suboxide TiOₓ ceramic electrode for water electrochemical treatment produced according to one of Claims 1-5 which comprises monolithic titanium suboxide TiOₓ, where x is in the range from 1.95 to 1.97, ceramic strip (1), on the one end of which on the flat surface of the strip (1) around the hole (2) at least 5 mm wide zone of 5-20 microns thick electroconductive coating (3) is sputtered, to which through the hole (2) with the spring washer (7) and the nut (8) the electroconductive element (4) is motionlessly mechanically fastened, to which the electrical conductor (5) is connected, and the end of the electrode (9) where electric connection is created, is sealed with the epoxide resin, sealing it off completely, but the rest of the monolithic titanium suboxide TiOₓ ceramic strip (1) is with the open porosity 10-30%.

## Patentansprüche

1. Verfahren zur Herstellung eines monolithischen keramischen Titansuboxid TiOₓ - Elektrode, vorgesehener für elektrochemische Wasserbehandlung, das die Wärmebehandlung des Titandioxids TiO₂, die Formierung der flachen Titansuboxid- Platte durch Extrusion, die Imprägnierung der Titansuboxid-Platte hermetisch in Harz, die Gestaltung mindestens einer leitfähigen Kontaktfläche auf der Titansuboxid-Platte und die Befestigung eines leitfähigen Elements mit der gestalteten elektrischen Verbindung enthält,
**dadurch gekennzeichnet, dass**
aus Titandioxid TiO₂ -Pulver, Wasser und Bindemittel-Gemisch durch Extrusion ein Rohling in Form einer flachen Platte geformt wird; der Rohling getrocknet wird, an einem Ende des Trockenpräparats wird ein Loch (2) für die Befestigung eines leitfähigen Elements (4) gebildet; bei der Wärmebehaltung in der Luft bei 1100 - 1300 °C für 1-3 Stunden und im Vakuum bei 1200 - 1300 °C für 1-3 Stunden die monolithische Titansuboxid TiOₓ, in welchem x in der Grenze von 1,95 bis 1,97 ist, keramische Platte (1) mit geöffneter Porosität von 10 - 30 % gewonnen wird; auf der flachen Plattenoberfläche um das Loch (2) im mindestens 5 mm breiten Strich eine von 5 bis 20 µm dichte leitfähige Beschichtung (3) gebildet wird, indem eine ununterbrochene Metall- Keramik-Verbindung gemacht wird; durch das Loch (2) mit Hilfe der Befestigungselemente (6,7,8) unbeweglich ein leitfähiges Element (4) mit der angeschlossenen elektrischen Leitung (5) befestigt wird; auf der Titansuboxid - keramischen Platte (1), wo die leitfähige Beschichtung (3) ist, dann durch die Vakuumimprägnierung das Elektrodenende (9), in dem die elektrische Verbindung festgestellt ist, völlig mit Epoxidharz abgedichtet wird.

2. Verfahren nach Anspruch 1, **dadurch gekennzeichnet, dass** eine von 5 bis 20 µm dicht gebildete leitfähige Beschichtung (3) um das Loch (2) im mindestens 5 mm breiten Strich auf beiden flachen Oberflächen der keramischen Platte (1) des monolithischen Titansuboxids TiOₓ gebildet wird.

3. Verfahren nach einem der Ansprüche 1 oder 2, **dadurch gekennzeichnet, dass** dessen leitfähige Beschichtung (3) aus Kupfer bedeckt wird.

4. Verfahren nach einem der Ansprüche 1 bis 3, **dadurch gekennzeichnet, dass** ein leitfähiges Element (4) der Titansuboxid - keramischen Platte (1) unbeweglich befestigt wird, indem eine Schraube (6), die man durch das Loch (2) durchsteckt und mit einer Sicherungsscheibe (7) und Mutter (8) fixiert, gebraucht wird.

5. Verfahren nach einem der Ansprüche 1 bis 4, **dadurch gekennzeichnet, dass** die Vakuumimprägnierung vom Elektrodenende (9), in dem die elektrische Verbindung festgestellt ist, mit Epoxidharz unter dem Druck von 40 - 50 kPa in 4 bis 8 Minuten gemacht wird.

6. Monolithisches keramisches Titansuboxid TiOₓ - Elektrode, vorgesehenes für elektrochemische Wasserbehandlung, hergestellt durch das Verfahren nach einem der Ansprüche 1 bis 5, die die keramische Platte (1) des monolithischen Titansuboxids TiOₓ, in welchem x in der Grenze von 1,95 bis 1,97 ist, enthält, auf einem Ende deren flachen Plattenoberfläche um das Loch (2) im mindestens 5 mm breiten Strich in einer 5 bis 20 µm dicht gebildeten leitfähigen Beschichtung (3) durch das Loch (2) mit der Schraube (6), Sicherungsscheibe (7) und Mutter (8) ein unbeweglich leitfähiges Element (4) mit der angeschlossenen elektrischen Leitung (5) befestigt ist, und die Elektrodenende (9) mit der festgelegten elektrischen Verbindung völlig mit Epoxidharz abgedichtet ist, aber das andere Teil der keramischen Platte (1) des monolithischen Titansuboxids TiOₓ mit geöffneter Porosität von 10-30 % ist.

## Revendications

1. Le procédé de fabrication d'un électrode monolithique en sous-oxyde de titane céramique TiOₓ pour le traitement électrochimique de l'eau comprenant le traitement thermique du dioxyde de titane TiO₂, la formation par l'extrusion d'une plaque plate de sous-oxyde de titane, l'imprégnation de la plaque de sous-oxyde de titane avec la résine d'étanchéité, la création au moins d'un contact électroconductive sur la plaque de sous-oxyde de titane et la fixation de l'élément electroconductive créant ainsi une connexion électrique,
**caractérisé en ce que**
on forme par extrusion une ébauche sous la forme d'une plaque plate de la poudre du dioxyde de titane TiO₂, de l'eau et du mélange des matériaux liants, on sèche l'ébauche; sur un bout de l'ébauche séchée on fait un trou(2) pour fixer l'élément electroconductive(4); en traitant thermiquement l'ébauche pendant 1-3 heures dans l'air à la température de 1100-1300°C et dans le vide à la température de 1200-1300°C pendant 1-3 heures on obtient une plaque céramique (1) avec la porosité ouverte de 10-30 % en sous-oxyde de titane monolithique TiOₓ, où x est dans la gamme de 1.95 à 1.97; sur la surface plate de la plaque autour du trou(2) sur la zone au moins de 5 mm de large on pulvérise la couche electroconductrice (3) de 5-20 microns d'épaisseur, en créant une connexion permanente métallocéramique; par le trou(2) avec l'aide des éléments de fixation (6,7,8) on fixe immobilement mécaniquement l'élément electroconductive (4), auquel un fil électrique(5) est raccordé, à la place de la plaque en sous-oxyde de titane céramique(1) où se trouve la couche electroconductrice; par la suite, en utilisant l'imprégnation à vide, le bout de l'électrode(9) où la connexion électrique est créée, est scellée avec la résine epoxide, en l'isolant complètement.

2. Le procédé selon la revendication 1 **caractérisé en ce que** la couche electroconductrice (3) de 5-20 microns d'épaisseur autour du trou (2) sur la zone au moins de 5 mm de large est pulvérisée sur les deux surfaces plates de la plaque de sous-oxyde de titane céramique monolithique TiOₓ (1).

3. Le procédé selon la revendication 1 ou 2 **caractérisé en ce que** le cuivre est pulvérisé comme la couche electroconductrice (3).

4. Le procédé selon d'une des revendications 1-3 **caractérisé en ce que** l'élément electroconductive (4) est immobilement mécaniquement fixé à la plaque céramique (1) en sous-oxyde de titane en utilisant une vis (6) qui est passée par le trou (2) et est fixé avec une rondelle à ressort (7) et un écrou (8).

5. Le procédé selon d'une des revendications 1-4 **caractérisé en ce que** l'imprégnation à vide avec la résine epoxide du bout de l'électrode (9) où la connexion électrique est créée, est exécutée sous la pression de 40-50 kPa pendant 4-8 minutes.

6. L'électrode monolithique en sous-oxyde de titane céramique TiOₓ pour le traitement électrochimique de l'eau produit selon une des revendications 1-5 qui contient une plaque céramique (1) du sous-oxyde de titane monolithique TiOₓ où x est dans la gamme de 1.95 à 1.97, à un bout de laquelle sur la surface plate de la plaque autour du trou (2) sur la zone au moins de 5 mm de large une couche electroconductrice (3) de 5-20 microns d'épaisseur est pulvérisée, à laquelle a travers du trou (2) à l'aide d'une vis(6), une rondelle à ressort (7) et un écrou (8) un élément electroconductive (4) est immobilement mécaniquement fixé, auquel un fil électrique (5) est raccordé, et le bout de l'électrode (9) où la connexion électrique est créée, qui est scellée avec la résine epoxide, en l'isolant complètement, mais le reste de la plaque céramique (1) en sous-oxyde de titane monolithique TiOₓ est avec la porosité ouverte de 10-30%.
